# FASCICULE DE BREVET EUROPEEN

(11) **EP 0 924 825 B1**
(45) Date de publication et mention de la délivrance du brevet: **26.07.2006**
(21) Numéro de dépôt: 98402927.2
(22) Date de dépôt: 25.11.1998
(51) Int. Cl.: H02B 1/24

(54) **Dispositif de commutation d'un générateur de centrale électrique et d'un transformateur avec un sectionneur à trois positions relié au transformateur**
Schaltvorrichtung für den Generator einer Kraftwerkanlage und einen Transformator mit einem Dreistellungsschalter verbunden am Transformator
Switching device for a generator in a power plant and a transformer with a three-position circuit breaker connected to the transformer

(43) Date de publication de la demande: 23.06.1999
(73) Titulaire: Areva T&D SA, 92309 Levallois-Perret Cedex (FR)
(72) Inventeur: Biquez, François, 69530 Brignais (FR); Willieme, Jean-Marc, 69350 La Mulatiere (FR)
(74) Mandataire: Poulin, Gérard

(56) Documents cités:
- EP-A- 0 567 773

## Description

L'invention se rapporte à un dispositif de commutation entre un générateur de centrale électrique et un transformateur de réseau de moyenne ou de haute tension, qui comprend un disjoncteur de générateur monté entre le générateur et le transformateur, et un sectionneur monté entre le disjoncteur de générateur et le transformateur, le sectionneur possédant un pôle fixe relié à un contact mobile par rapport à ce pôle fixe pour ouvrir ou fermer le sectionneur, ou pour relier le pôle fixe à une prise de terre.

D'une manière connue, l'ouverture du disjoncteur de générateur assure la coupure du circuit électrique qui relie le générateur au transformateur, et qui est en général triphasé. L'ouverture subséquente du sectionneur, qui n'a aucun pouvoir de coupure, permet d'intervenir avec une sécurité absolue sur le disjoncteur isolé de la tension.

Dans le document EP 0 567 773 A2, le sectionneur possède un pôle fixe qui est relié au disjoncteur de générateur. Pour intervenir sur le transformateur, il est prévu de disposer un sectionneur de terre supplémentaire pour décharger le transformateur après l'avoir isolé du générateur par l'ouverture du disjoncteur et l'ouverture subséquente du sectionneur, et du réseau moyenne ou haute tension par un disjoncteur de réseau.

Le but de l'invention est un dispositif de commutation simplifié, notamment par rapport au sectionneur de terre supplémentaire.

L'idée à la base de l'invention est de disposer un seul sectionneur qui intègre une mise à la terre et qui est relié au transformateur.

A cet effet, l'invention a pour objet un dispositif de commutation entre un générateur de centrale électrique et un transformateur de réseau de moyenne ou de haute tension, qui comprend un disjoncteur de générateur monté entre le générateur et le transformateur, et un sectionneur monté entre le disjoncteur de générateur et le transformateur, le sectionneur possédant un pôle fixe relié à un contact mobile par rapport à ce pôle fixe pour ouvrir ou fermer le sectionneur, ou pour relier le pôle fixe à une prise de terre, caractérisé en ce que le pôle fixe du sectionneur est relié au transformateur.

Pour intervenir sur le transformateur, on ouvre le disjoncteur de générateur puis le sectionneur, on ouvre ensuite un disjoncteur de réseau monté entre le transformateur et le réseau, et on relie enfin le pôle fixe du sectionneur à la prise de terre par l'intermédiaire du contact mobile pour décharger le transformateur. Selon l'invention, la commutation, l'isolation, et la mise à la terre du transformateur sont effectuées à l'aide d'un seul sectionneur intégré au dispositif de commutation.

D'autres avantages de l'invention apparaîtront à la lecture de la description d'un mode de réalisation de l'invention illustré par les dessins.

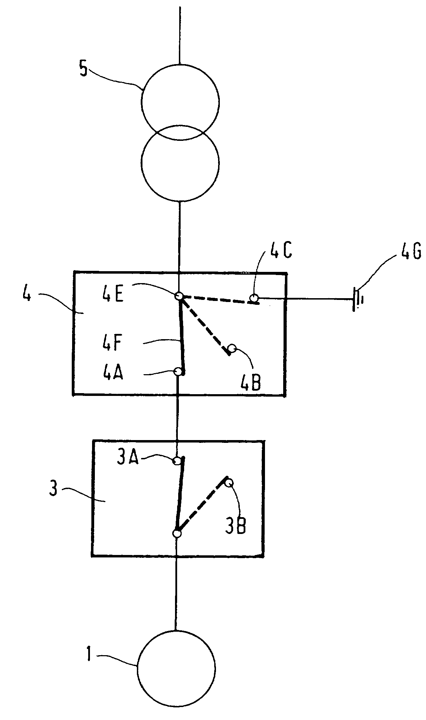

La figure unique montre un schéma bloc du dispositif de commutation selon l'invention.

Sur la figure unique, un générateur 1 de centrale électrique est commuté à un transformateur 5 de réseau de moyenne et de haute tension par l'intermédiaire d'un dispositif de commutation qui comprend un disjoncteur de générateur 3. Le générateur de centrale électrique est du type d'une turbine à gaz ou d'une turbine à cycle combiné à gaz et à vapeur d'eau, et comprend des jeux de barres constitués de trois conducteurs entourés de trois enveloppes métalliques dans lesquelles s'insèrent trois phases du disjoncteur de générateur. Le disjoncteur de générateur est du type d'un appareillage disposé dans une enveloppe métallique remplie d'un gaz diélectrique sous pression. Il comprend une position de fermeture référencée 3A et une position d'ouverture référencée 3B.

Un sectionneur 4 est monté entre le disjoncteur de générateur 3 et le transformateur 5. Un pôle fixe 4E du sectionneur est relié à un contact mobile 4F qui est déplacé pour ouvrir le sectionneur dans une première position d'ouverture référencée 4B, ou pour le fermer dans une deuxième position de fermeture 4A. Le contact mobile est déplacé dans une troisième position référencée 4C pour relier le pôle fixe à une prise de terre 4G.

Selon l'invention, le pôle 4E du sectionneur du dispositif de commutation est relié au transformateur 5. En condition de service, le disjoncteur de générateur 3 et le sectionneur 4 sont fermés. Toute intervention sur le transformateur 5, par exemple dans un but de maintenance, est précédée d'une ouverture du disjoncteur de générateur 3 et d'une ouverture subséquente du sectionneur 4, puis d'ouverture d'un disjoncteur de réseau non représenté sur la figure unique. Le transformateur est isolé. Pour le décharger, le pôle fixe 4E du sectionneur est relié à la prise de terre 4G par l'intermédiaire du contact mobile 4F.

## Revendications

1. Un dispositif de commutation entre un générateur (1) de centrale électrique et un transformateur (5) de réseau de moyenne ou de haute tension, qui comprend un disjoncteur de générateur (3) monté entre le générateur (1) et le transformateur (5), et un sectionneur (4) monté entre le disjoncteur de générateur (3) et le transformateur (5), le sectionneur (4) possédant un pôle fixe (4E) relié à un contact mobile (4F) par rapport à ce pôle fixe pour ouvrir (4B) ou fermer (4A) le sectionneur, ou pour relier le pôle fixe à une prise de terre (4G), **caractérisé en ce que** le pôle fixe (4E) du sectionneur est relié au transformateur (5).

## Claims

1. Switchgear between a power station generator (1) and a transformer (5) of a medium voltage or high voltage network, said switchgear comprising a generator circuit breaker (3) connected between the generator (1) and the transformer (5), together with a disconnector (4) connected between the generator circuit breaker (3) and the transformer (5), the disconnector (4) having a fixed pole (4E) connected to a moving contact (4F) movable relative to said fixed pole to open (4B) or to close (4A) the disconnector, or to connect the fixed pole to a ground terminal (4G), said switchgear being **characterized in that** the fixed pole (4E) of the disconnector is connected to the transformer (5).

## Patentansprüche

1. Schaltvorrichtung zwischen einem Generator (1) einer Kraftwerkanlage und einem Transformator (5) für ein Mittel- bzw. Hochspannungsnetz, die einen zwischen dem Generator (1) und dem Transformator (5) geschalteten Generatorleistungsschalter (3) und einen zwischen dem Generatorleistungsschalter (3) und dem Transformator (5) geschalteten Trennschalter (4) aufweist, wobei der Trennschalter (4) einen festen Pol (4E) besitzt, der mit einem Kontakt (4F) verbunden ist, der zu diesem festen Pol beweglich ist, um den Trennschalter zu öffnen (4B) bzw. zu schließen (4A), oder um den festen Pol mit einer Erdung (4G) zu verbinden, **dadurch gekennzeichnet, dass** der feste Pol (4E) des Trennschalters mit dem Transformator (5) verbunden ist.
